# EUROPÄISCHE PATENTANMELDUNG

(11) **EP 3 106 068 A1**
(43) Veröffentlichungstag der Anmeldung: **21.12.2016**
(21) Anmeldenummer: 15172446.5
(22) Anmeldetag: 16.06.2015
(51) Int. Cl.: A47J 37/06, H05B 3/72

(54) **GRILLGERÄT**

(71) Anmelder: Gruber, Franz, 4063 Hörsching (AT)
(72) Erfinder: Gruber, Franz, 4063 Hörsching (AT)
(74) Vertreter: Jell, Friedrich

(57) **Zusammenfassung**

Es wird ein Grillgerät (1) gezeigt, mit einer eine Grillfläche (3) ausbildenden Grillplatte (2), mit einem Spannmittel (7), das mehrere mit der Grillplatte (2) fest verbundene und dieser rückwärtig abstehende Spannbolzen (8) sowie mehrere jeweils mit einem Spannbolzen (8) zusammenwirkende Spannelemente (9) aufweist, und mit wenigstens einer Heizplatte (6, 60), die ein in der Heizplatte (6, 60) gekapseltes elektrisches Heizmittel (13) und mehrere Befestigungsöffnungen (12) aufweist, wobei die Spannbolzen (8) die Befestigungsöffnungen (12) der Heizplatte (6, 60) durchragen und unter jeweiligem Zusammenwirken mit den rückwärtig der Heizplatte (6, 60) vorgesehenen Spannelementen (9) die Heizplatte (6, 60) an der Grillplatte (2) befestigen. Um hohe Standfestigkeit und verbesserte Grillergebnisse zu erreichen, wird vorgeschlagen, dass die Heizplatte (6, 60) eine mit dem Heizmittel (13) thermisch verbundene Wärmeverteilungsplatte (17) aufweist, die an die Grillplatte (2) anschließt, wobei zum Ausgleich von thermischen Spannungen mindestens ein Spannbolzen (8) seine jeweilige Befestigungsöffnung (12) an der Heizplatte (6, 60) mit einem, zumindest zur Wärmeverteilungsplatte (17) seitlichen Lagerspiel (18) durchgreift.

## Beschreibung

Die Erfindung betrifft ein Grillgerät mit einer eine Grillfläche ausbildenden Grillplatte, mit einem Spannmittel, das mehrere mit der Grillplatte fest verbundene und dieser rückwärtig abstehende Spannbolzen sowie mehrere jeweils mit einem Spannbolzen zusammenwirkende Spannelemente aufweist, und mit wenigstens einer Heizplatte, die ein in der Heizplatte gekapseltes elektrisches Heizmittel und mehrere Befestigungsöffnungen aufweist, wobei die Spannbolzen die Befestigungsöffnungen der Heizplatte durchragen und unter jeweiligem Zusammenwirken mit den rückwärtig der Heizplatte vorgesehenen Spannelementen die Heizplatte an der Grillplatte befestigen.

Zur elektrischen Beheizung einer Grillplatte eines Grillgeräts ist es aus dem Stand der Technik bekannt (EP1865753A1), eine Heizplatte rückwärtig der Grillplatte mit Spannmitteln zu befestigen. Hierfür werden mehrere mit der Grillplatte fest verbundene und dieser rückwärtig abstehende Spannbolzen vorgesehen, die Befestigungsöffnungen an der Heizplatte durchragen und mit rückwärtig der Heizplatte vorgesehenen Spannelementen diese Heizplatte an die Grillplatte pressen bzw. daran befestigen. Die Heizplatte der EP1865753A1 schließt mit von einer Glasschicht abgedeckten elektrischen Heizwiderständen bzw. Heizmitteln an die Grillplatte an. Nachteilig bedarf es eines vergleichsweise hohen Aufwands an der Widerstandsschicht bzw. deren Steuerung, um an der Grillplatte eine gewünschte gleichmäßige Temperaturverteilung sowie eine hohe Temperaturstabilität für ein schnelles, einheitliches Grillen zu ermöglichen. Zudem bedarf es einer mechanisch vergleichsweise steifen bzw. massiven Grillplatte, um Verwerfung an dieser - beispielsweise aufgrund der Temperaturdifferenz zu einer aufgelegten, kühleren Grillware - zu vermeiden. Diese Nachteile des Stand der Technik stehen nicht nur einem gleichmäßigen Grillen entgegen, sie können auch zu Beschädigungen am Grillgerät führen.

Die Erfindung hat sich daher die Aufgabe gestellt, ein Grillgerät der eingangs geschilderten Art derart konstruktiv zu verändern, dass dieses in seiner Standfestigkeit erhöht ist und für optimale Ergebnisse gleichmäßig und schnell grillt.

Die Erfindung löst die gestellte Aufgabe dadurch, dass die Heizplatte eine mit dem Heizmittel thermisch verbundene Wärmeverteilungsplatte aufweist, die an die Grillplatte anschließt, wobei zum Ausgleich von thermischen Spannungen mindestens ein Spannbolzen seine jeweilige Befestigungsöffnung an der Heizplatte mit einem, zumindest zur Wärmeverteilungsplatte seitlichen Lagerspiel durchgreift.

Weist die Heizplatte eine mit dem Heizmittel thermisch verbundene Wärmeverteilungsplatte auf, die an die Grillplatte anschließt, kann damit - konstruktiv einfach gelöst - die Temperaturverteilung an der Grillplatte gleichmäßiger eingestellt werden, ohne dass es am elektrischen Heizelement bzw. an dessen Ansteuerung und Regelung eines erhöhten Aufwands bedarf. Zudem kann eine rückseitig der Grillplatte vorgesehene Wärmeverteilungsplatte eine ergänzende Wirkung auf die Wärmespeicherkapazität der Grillplatte haben. Das erfindungsgemäße Grillgerät kann also eine besonders hohe Temperaturstabilität gewährleisten. Es kann demnach beispielsweise ein schnelleres Grillen bei konstanterer Temperatur ermöglicht werden, was ein verbessertes Grillergebnis sicherstellt. Besonders aber kann sich die Erfindung dadurch auszeichnen, dass mindestens ein Spannbolzen seine jeweilige Befestigungsöffnung an der Heizplatte mit einem, zumindest zur Wärmeverteilungsplatte seitlichen Lagerspiel durchgreift. Damit kann nämlich trotz einer rückseitig an die Grillplatte anschließenden Wärmeverteilungsplatte eine relative Bewegung dieser zueinander verbessert zugelassen werden, wodurch thermische Spannungen zwischen Grillplatte und Heizplatte ausgeglichen werden können. Durch das Abtragen derartiger thermischer Spannungen sind nicht zuletzt Verwerfungen an der Grillplatte vermeidbar - was in weiterer Folge die Standfestigkeit des Grillgeräts erhöhen kann. Auf diese Weise ist es möglich, eine Grillplatte des erfindungsgemäßen Grillgeräts vergleichsweise dünn auszuführen, womit Vorteile hinsichtlich seines Gewichts, des Materialaufwands und der damit zusammenhängenden Herstellungskosten erreicht werden können. Das erfindungsgemäße Grillgerät kann sich somit nicht zuletzt durch Handhabungsfreundlichkeit, etwa beim Transport, auszeichnen. Zudem ist es standfest, kostengünstig und gewährleistet eine hohe Grillqualität, beispielsweise aufgrund besonders schnellen und gleichmäßigen Anbratens bzw. Bratens der Grillware.

Im Allgemeinen wird festgehalten, dass unter Grillgerät ein Gargerät zum Braten oder Grillen verstanden werden kann. In diesem Zusammenhang kann natürlich auch eine Grillplatte als Bratplatte bzw. Garplatte verstanden werden.

Durchgreift der Spannbolzen die Befestigungsöffnung an der Heizplatte mit einem radialen Lagerspiel, kann die Bewegungsfreiheit der Spanbolzen in der Befestigungsöffnung erhöht wird. Die Robustheit der Grillplatte gegenüber Verwerfungen kann damit weiter erhöht werden, selbst wenn diese materialsparend ausgeführt ist.

Zur Erreichung einer besonders standfesten Grillplatte kann beitragen, wenn alle Spannbolzen ihre jeweilige Befestigungsöffnung an der Heizplatte mit einem Lagerspiel durchgreifen und damit die Heizplatte an der Grillplatte lose, also deren relative Bewegung zueinander nicht verhindernd, befestigen.

Der Wärmeübergang zwischen Grillplatte und Heizplatte kann verbessert werden, wenn zwischen Grillplatte und Heizplatte eine Wärmeleitpaste vorgesehen ist. Dies kann auch dazu beitragen, ein eventuelles Spaltmaß zwischen Grill- und Heizplatte auszugleichen. Damit kann unter anderem eine gleichmäßige Temperaturverteilung an der Grillplatte gewährleistet werden, was das Bratergebnis des Grillgeräts verbessert.

Die gleichmäßige Temperaturverteilung an der Grillplatte kann weiter verbessert werden, wenn die Wärmeleitpaste vollflächig zwischen Grillplatte und Heizplatte vorgesehen ist.

Befestigen die Spannelemente die Heizplatte an der Grillplatte unter Federbelastung, kann dies zu einem Ausgleich von Spaltmaß zwischen Grillplatte und Heizplatte beitragen. Ein derart federbelastetes Aufspannen kann beispielsweise unter Verwendung einer Schraubenfeder oder eines elastisch dehnbaren Spannbolzens, ähnlich einer Dehnschraube, ermöglicht werden.

Die Konstruktion des Grillgeräts kann, insbesondere hinsichtlich dessen modularer Erweiterung, vereinfacht werden, wenn rückwärtig der Grillplatte mehrere Heizplatten nebeneinander vorgesehen sind.

Schließen die Heizplatten spaltfrei seitlich aneinander an, kann eine Beeinträchtigung hinsichtlich einer gleichmäßigen Temperaturverteilung an der Grillplatte verbessert vermieden werden.

Ist rückwärtig der Grillplatte ein Rahmen vorgesehen ist, der die Heizplatte einfasst, kann die Verwindungssteifigkeit der Grillplatte und damit des Grillgeräts auf konstruktiv einfache Weise erhöht werden.

Indem der Rahmen den Spannbolzen vorsteht, kann auf konstruktiv einfache Weise verhindert werden, dass sich eine thermische Verlustbrücke am Grillgerät ausbildet. Eine vergleichsweise hohe Energieeffizienz kann damit am Grillgerät gewährleistet werden.

Die Befestigung der Heizplatte an der Grillplatte kann verbessert werden, wenn das Spannmittel mindestens einen Niederhalter aufweist, der am Rahmen befestigt die Heizplatte zusätzlich zu den Spannbolzen und Spannelementen an der Grillplatte befestigt. Die Standfestigkeit des Grillgeräts kann damit verbessert werden. Vorzugsweise kann der Niederhalter zur Sicherung eines Stoßes und damit zur Erhöhung der Standfestigkeit des Grillgeräts zwischen zwei Heizplatten herangezogen werden, wenn dieser Niederhalter eine Leiste aufweist, die über den Stoß zweier Heizplatten verlaufend diese an der Grillplatte aufspannend befestigt.

Eine unerwünschte thermische Abstrahlung der Heizplatte kann weiter minimiert werden, wenn rückseitig der Heizplatte eine Wärmeisolierung vorgesehen ist. Auf diese Weise ist die Energieeffizienz des Grillgeräts weiter erhöhbar.

Konstruktiv einfach gelöst kann die Wärmeisolierung am Grillgerät befestigt werden, in dem die Spannbolzen die Wärmeisolierung durchragen und die rückwärtig der Wärmeisolierung vorgesehenen Spannelementen die Heizplatte samt der Wärmeisolierung an der Grillplatte befestigen.

Eine Zentrierung der Spannelemente in der Befestigungsöffnung an der Heizplatte kann dadurch erreicht werden, dass die Spannbolzen die elastische Wärmeisolierung seitlich spielfrei durchragen. Zudem kann durch die elastische Eigenschaft der Wärmeisolierung die Heizplatte an der Grillplatte unter Federbelastung befestigt werden, wodurch thermische Spannungen sicher abgetragen werden können. Die Standfestigkeit des Grillgeräts kann dadurch weiter erhöht werden.

In den Figuren ist beispielsweise der Erfindungsgegenstand anhand einer Ausführungsvariante näher dargestellt. Es zeigen
- Fig. 1: eine seitliche Schnittansicht zu einem Grillgerät,
- Fig. 2: eine Detailansicht der Fig. 1 und
- Fig. 3: eine abgerissene Draufsicht auf das nach Fig. 1 dargestellte Grillgerät in teilweise aufgerissener Darstellung.

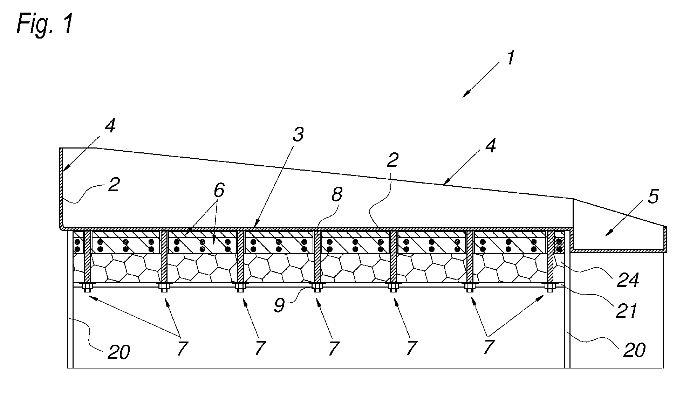

Gemäß Fig. 1 wird beispielsweise ein Grillgerät 1 mit einer Grillplatte 2 aus Edelstahl gezeigt, die eine Grillfläche 3, einen von der Grillfläche 3 hochgezogenen Spritzschutz 4 und eine an die Grillfläche 3 anschließende Fettabflussrinne 5 ausbildet.

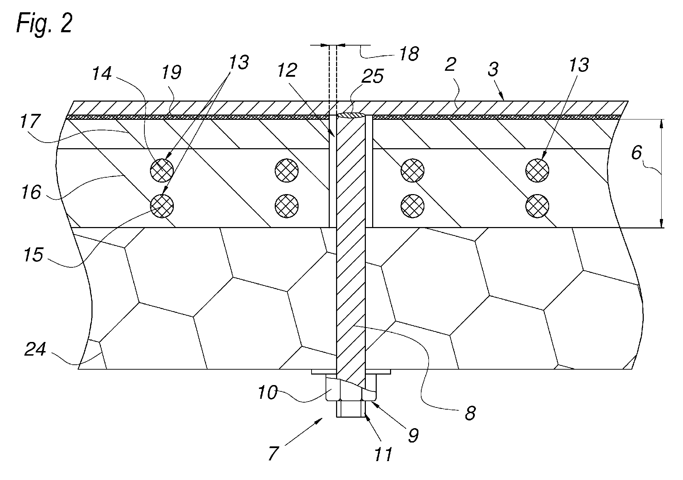

Die Grillfläche 3 wird elektrisch beheizt, indem rückwärtig an der Grillplate 2 eine Heizplatte 6 über Spannmittel 7 befestigt ist. Hierzu weisen die Spannmittel 7 mehrere Spannbolzen 8 und mehrere Spannelemente 9 in Form von Muttern 10 auf, die am Außengewinde 11 der jeweiligen Spannbolzen 8 axial verstellbar gelagert sind. Die Spannbolzen 8 sind an der Grillplatte 2 über einen Schweißpunkt 25, hergestellt durch ein Punktschweißverfahren, angeschweißt und stehen dieser Grillplatte 2 rückwärtig ab - wie dies in der Fig. 2 im Detail erkannt werden kann. In der Heizplatte 6 sind Befestigungsöffnungen 12 für die Spannbolzen 8 vorgesehen, die von den Spannbolzen 8 durchragt werden. Unter Zusammenwirken der Spannbolzen 8 mit den rückwärtig der Heizplatte 6 vorgesehenen Spannelementen 9 wird die Heizplatte 6 an die Grillplatte 2 gepresst und damit daran befestigt. Die Heizplatte 6 weist ein elektrisches Heizmittel 13 auf, das von mehreren übereinander vorgesehenen, mäanderförmig verlaufenden Heizschlangen 14, 15 ausgebildet wird. Diese Heizschlangen 14, 15 sind in einer Trägerplatte 16 der Heizplatte 6 eingebettet und in der Heizplatte 6 gekapselt. Zudem weist die Heizplatte 6 - wie vorstehend bereits erwähnt - mehrere durchgehende Befestigungsöffnungen 12 auf, die über die Breitseite der Heizplatte 6 gleichmäßig verteilt angeordnet sind.

Um eine hohe Temperaturstabilität sowie eine gleichmäßige Temperaturverteilung an der Grillfläche 3 zu erreichen, ist der Heizplatte 6 eine Wärmeverteilungsplatte 17 aus Aluminium bzw. einer Aluminiumlegierung zugeordnet, die mit der Trägerplatte 16 stoffschlüssig verbunden ist und an die Grillpatte 2 anschließt. Die Wärmeverteilungsplatte 17 schließt an die Trägerplatte 16 an und ist somit mit dem Heizmittel 13 thermisch verbunden. So entsteht eine zusätzliche Wärmespeicherkapazität im Bereich der Grillplatte 2. Erfindungsgemäß werden thermischen Spannungen, die Verwerfungen der Gripplatte verursachen können - insbesondere wenn kaltes Grillgut auf die Grillfläche 3 aufgelegt wird - ausgeglichen, indem die Spannbolzen 8 ihre jeweiligen Befestigungsöffnungen 12 an der Heizplatte 6 mit einem seitlichen Lagerspiel 18 zur Wärmeverteilungsplatte 17 durchgreifen. Das Ausführungsbeispiel zeigt ein radiales Lagerspiel 18, was eine lose Lagerung der Heizplatte 6 an der Grillplatte 2 schafft, um eine thermische Expansion/Kontraktion aufnehmen zu können. Erfindungsgemäß ist somit eine Bewegungsfreiheit von Heizplatte 6 zu Grillplatte 2 relativ zueinander gegeben - was die Standfestigkeit des Grillgeräts sichert, selbst wenn die Grillplatte 2 materialsparend, also relativ dünn ausgeführt ist.

Es ist aber auch vorstellbar - was nicht näher dargestellt worden ist-, dass zusätzlich oder alternativ ein seitliches Lagerspiel beispielsweise von einer schlitzförmigen Befestigungsöffnung ausgebildet wird und damit dem Spannbolzen 8 eine bevorzugte Bewegungsfreiheit vorgibt.

Zudem ist zwischen Grillplatte 2 und Heizplatte 6 eine Wärmeleitpaste 19 vollflächig vorgesehen, um den Wärmeübergang zwischen Grillplatte 2 und Heizplatte 6 zu verbessern.

Des Weiteren sind rückwärtig der Grillplatte 2 mehrere Heizplatten 6, 60 nebeneinander vorgesehen, die spaltfrei aneinander seitlich anschließen. Diese können beispielsweise separat angesteuert werden, was die vielseitige Verwendbarkeit des Grillgeräts sicherstellt.

Rückwärtig der Grillplatte 2 ist ein geschlossener Rahmen 20 vorgesehen ist, der die Heizplatte einfasst und den Spannbolzen 8 vorsteht, um die Gefahr einer thermischen Brücke im Grillgerät 1 zu verringern.

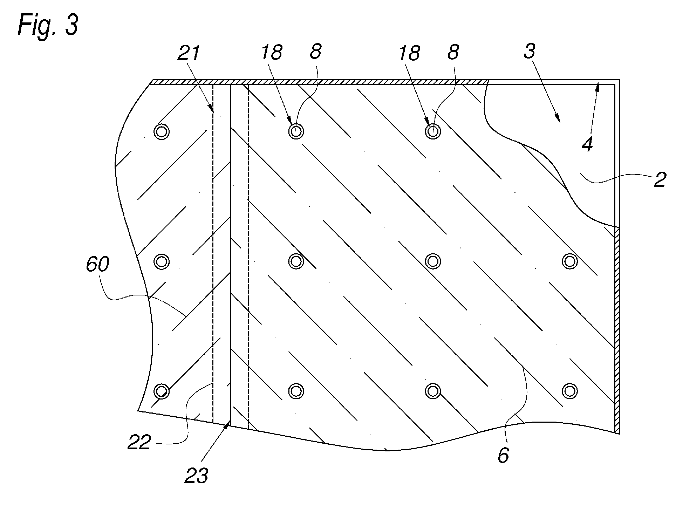

Außerdem weisen -wie in Fig. 2 und 3 zu erkennen- das Spannmittel 7 zur Erhöhung der Standfestigkeit einen Niederhalter 21 in Form einer Leiste 22 auf, die am Rahmen 20 befestigt ist und die Heizplatten 6, 60 zusätzlich zu den Spannbolzen 8 und Spannelementen 9 an der Grillplatte 2 befestigt. Hierfür läuft die Leiste 22, über den Stoß 23 der beiden aneinander angrenzenden Heizplatten 6, 60.

Rückseitig der Heizplatte 2 ist eine plattenförmige Wärmeisolierung 24 vorgesehen, die teilweise elastische Eigenschaft aufweist. Die Spannmittel 7 drücken die Wärmeisolierung 24 mitsamt der Heizplatten 6, 60 an die Grillplatte 2, wobei die elastische Eigenschaft der Wärmeisolierung 24 dazu beiträgt, die Heizplatte 6, 60 an der Grillplatte 2 unter Federbelastung zu befestigen.

Zudem können aufgrund der elastischen Eigenschaft der Wärmeisolierung 24 die Spannbolzen 8 seitlich spielfrei an der Wärmeisolierung 24 anliegen, ohne die erfindungsgemäßen Vorteile zu beeinträchtigen. Dadurch kann die Wärmeisolierung 24 auch genutzt werden, die Spannbolzen 8 in ihren jeweiligen Befestigungsöffnungen 12 hinsichtlich des seitlichen Spiels 18 zu zentrieren.

## Patentansprüche

1. Grillgerät mit einer eine Grillfläche (3) ausbildenden Grillplatte (2), mit einem Spannmittel (7), das mehrere mit der Grillplatte (2) fest verbundene und dieser rückwärtig abstehende Spannbolzen (8) sowie mehrere jeweils mit einem Spannbolzen (8) zusammenwirkende Spannelemente (9) aufweist, und mit wenigstens einer Heizplatte (6, 60), die ein in der Heizplatte (6, 60) gekapseltes elektrisches Heizmittel (13) und mehrere Befestigungsöffnungen (12) aufweist, wobei die Spannbolzen (8) die Befestigungsöffnungen (12) der Heizplatte (6, 60) durchragen und unter jeweiligem Zusammenwirken mit den rückwärtig der Heizplatte (6, 60) vorgesehenen Spannelementen (9) die Heizplatte (6, 60) an der Grillplatte (2) befestigen, **dadurch gekennzeichnet, dass** die Heizplatte (6, 60) eine mit dem Heizmittel (13) thermisch verbundene Wärmeverteilungsplatte (17) aufweist, die an die Grillplatte (2) anschließt, wobei zum Ausgleich von thermischen Spannungen mindestens ein Spannbolzen (8) seine jeweilige Befestigungsöffnung (12) an der Heizplatte (6, 60) mit einem, zumindest zur Wärmeverteilungsplatte (17) seitlichen Lagerspiel (18) durchgreift.

2. Grillgerät nach Anspruch 1, **dadurch gekennzeichnet, dass** der Spannbolzen (8) die Befestigungsöffnung (12) an der Heizplatte (6, 60) mit einem radialen Lagerspiel (18) durchgreift.

3. Grillgerät nach Anspruch 1 oder 2, **dadurch gekennzeichnet, dass** alle Spannbolzen (8) ihre jeweilige Befestigungsöffnung (12) an der Heizplatte (6, 60) mit einem Lagerspiel (18) durchgreifen und damit die Heizplatte (6, 60) an der Grillplatte (2) lose befestigen.

4. Grillgerät nach Anspruch 1, 2 oder 3, **dadurch gekennzeichnet, dass** zwischen Grillplatte (2) und Heizplatte (6, 60) eine Wärmeleitpaste (19) vorgesehen ist.

5. Grillgerät nach Anspruch 4, **dadurch gekennzeichnet, dass** die Wärmeleitpaste (19) vollflächig zwischen Grillplatte (2) und Heizplatte (6, 60) vorgesehen ist.

6. Grillgerät nach einem der Ansprüche 1 bis 5, **dadurch gekennzeichnet, dass** die Spannelemente (9) die Heizplatte (6, 60) an der Grillplatte (2) unter Federbelastung befestigen.

7. Grillgerät nach einem der Ansprüche 1 bis 6, **dadurch gekennzeichnet, dass** rückwärtig der Grillplatte (2) mehrere Heizplatten (6, 60) nebeneinander vorgesehen sind.

8. Grillgerät nach Anspruch 7, **dadurch gekennzeichnet, dass** die Heizplatten (6, 60) spaltfrei seitlich aneinander anschließen.

9. Grillgerät nach einem der Ansprüche 1 bis 8, **dadurch gekennzeichnet, dass** rückwärtig der Grillplatte (2) ein Rahmen (20) vorgesehen ist, der die Heizplatte (6, 60) einfasst.

10. Grillgerät nach Anspruch 9, **dadurch gekennzeichnet, dass** der Rahmen (20) den Spannbolzen (8) vorsteht.

11. Grillgerät nach Anspruch 9 oder 10, **dadurch gekennzeichnet, dass** das Spannmittel (7) mindestens einen Niederhalter (21) aufweist, der am Rahmen (20) befestigt die Heizplatte (6, 60) zusätzlich zu den Spannbolzen (8) und Spannelementen (9) an der Grillplatte (2) befestigt.

12. Grillgerät nach Anspruch 11, **dadurch gekennzeichnet, dass** ein Niederhalter (21) eine Leiste (22) aufweist, die über den Stoß (23) zweier Heizplatten (6, 60) verlaufend diese an der Grillplatte (2) aufspannend befestigt.

13. Grillgerät nach einem der Ansprüche 1 bis 12, **dadurch gekennzeichnet, dass** rückseitig der Heizplatte (6, 60) eine Wärmeisolierung (24) vorgesehen ist.

14. Grillgerät nach Anspruch 13, **dadurch gekennzeichnet, dass** die Spannbolzen (8) die Wärmeisolierung (24) durchragen und dass die rückwärtig der Wärmeisolierung (24) vorgesehenen Spannelementen (9) die Heizplatte (6, 60) samt der Wärmeisolierung (24) an der Grillplatte (2) befestigen.

15. Grillgerät nach Anspruch 13 oder 14, **dadurch gekennzeichnet, dass** die Spannbolzen (8) die elastische Wärmeisolierung (24) seitlich spielfrei durchragen.
